# EUROPEAN PATENT APPLICATION

(11) **EP 1 102 241 A1**
(43) Date of publication of application: **23.05.2001**
(21) Application number: 99203883.6
(22) Date of filing: 19.11.1999
(51) Int. Cl.: G10L 15/22

(54) **Adaptive voice-controlled dialogue system**

(71) Applicant: Medical Development & Technology Information Division B.V., 5062 CD Oisterwijk (NL)
(72) Inventor: Janssen, Dionysius Paul Marie, 5081 BC Hilvarenbeek (NL)
(74) Representative: Griebling, Onno

(57) **Abstract**

An adaptive speech-controlled dialogue system (1) is described, which is arranged for adapting a dialogue characteristic to specific wishes of a specific user based on experiences with respect to this specific user. The system can be in a predetermined number of dialogue states (DSi), wherein each dialogue state (DSi) is associated with predetermined dialogue actions, including predetermined transition possibilities (TR(i;j)) to predetermined other dialogue states (DSj). In at least one dialogue state, the system has certain communication options with respect to the communication with the user, wherein the system adapts itself in an adaptive way to apparent wishes of the user concerned.

Particularly, the system is arranged for developing, for at least one user (U), a user profile which defines for the said communication options the preferences associated with that said user (U).

## Description

The present invention relates in general to a speech-controlled dialogue system, with which is meant a computer system that can exchange data with a user and can receive instructions and data in dialogue form, especially by means of spoken text.

Computer systems for recording data and later retrieval of data are commonly known. Such a system has in general a communication interface for two-way communication with a user. For communication from user to system, hereinafter indicated as "input", such communication interface comprises input means, and for communication from system to user, hereinafter indicated as "output", such communication interface comprises output means. Conventionally, the output means are primarily a display and a printer, while the input means are, conventionally, primarily a keyboard.

For increasing the ease of use, speech-based communication interfaces have recently been developed. Herein, the input means comprise a microphone for receiving spoken text from a user, as well as a speech recognition module, which converts the sound signals received from the user into signals understandable for the system, such as for instance text or control instructions. Conversely, the output means can comprise a speaker or the like for generating sound signals, as well as a speech generation module generating speech signals. Then, for instance, a user may, instead of reading a written message "close file (yes/no)?" on his screen, hear a spoken text "do you want to close the file?", and he may, instead of typing the instruction "yes[enter]", pronounce the instruction "yes". Since speech-based communication interfaces are known per se, for instance from US-A-5.051.924 or US-A-5.168.548, they will not be explained further here.

Although a speech-controlled dialogue system may already be used in the case of only one single user, and the present invention relates also to such a situation, the present invention more particularly relates to a speech-controlled dialogue system with a large number of users that can input and/or request information through that system. An important example of an application situation is a hospital, where it must be possible for medical files to be looked into and/or to be modified at different places by different persons. The present invention relates particularly, but not exclusively, to such an application situation, and will therefore be explained hereinafter for this application example. However, it is stressed that the invention can also be applied to other areas, such as for instance an insurance office, an administration office, etc.

Existing systems have the disadvantage that they follow a dialogue with a user according to a predetermined and fixed protocol. The protocol, therefore, is not easy or convenient in use for all users to the same extent. In any case, each user must get used to a non-changing system.

The present invention aims to solve this problem.

More particularly, the present invention aims to provide a dialogue system which provides increased convenience of use in that the dialogue followed by the system is better tuned to the wishes of each individual user.

In principle, it would of course be possible to consider the dialogue system as a combination of many dialogue subsystems, wherein each subsystem is allocated to a fixed user and follows a preprogrammed dialogue characteristic which is adapted to this one fixed user. Such subsystems could be implemented in hardware or software. A disadvantage of such an approach is, however, that a new dialogue characteristic must be developed for each new user.

The present invention chooses another approach. According to an important aspect of the present invention, a dialogue system is adaptive. The dialogue characteristic is not fixed but is adapted to the specific wishes of the users, by the system itself, based on experience relating to each user.

In practice, this has as result that each user may experience the system in an individual way as being a dialogue system fitting him well, and adapted to his specific wishes. Instead of a user having to get used to a fixed system, he experiences a flexible system which gets used to the user. Based on experiences from the past, the system can even anticipate to wishes of the user.

These and other aspects, characteristics and advantages of the present invention will be explained further by the following description of an application example of a dialogue system according to the invention with reference to the drawing, in which:
figure 1 shows a block diagram of a dialogue system; and
figure 2 illustrates dialogue states and transitions there between.

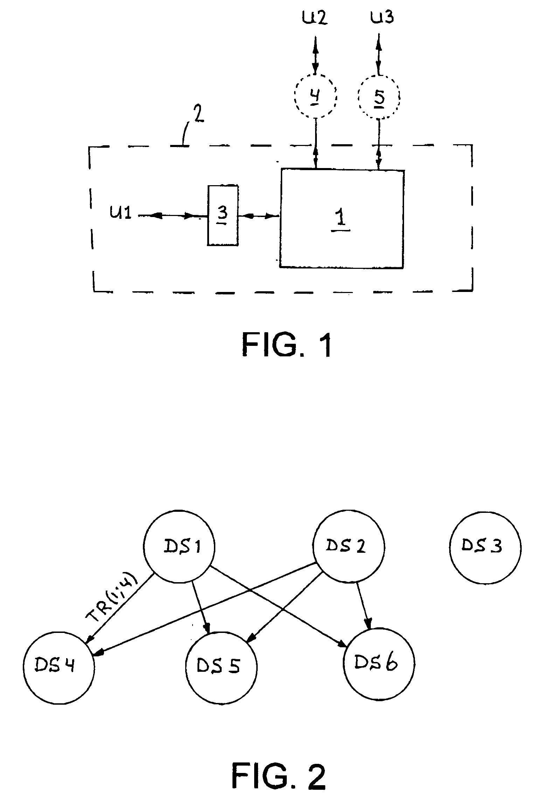

Figure 1 schematically shows a dialogue system indicated generally with the reference number 1, applied in the context of a hospital 2 for processing medical files. A large number of users U, only three of which are shown in figure 1, may be connected to the system 1. A user can be connected directly to the system 1 by means of a terminal 3 arranged within the hospital 2, such as shown for a first user U1. Such a user will be indicated as "internal" user. However, the system 1 is also accessible for external users. In figure 1, a second user U2 (for instance a physician) is shown, which is connected to the system by means of a telephone network 4, and a third user U3 is shown, which is coupled to the system by means of the internet 5. However, it will be clear that a dialogue system may offer one or more of said coupling possibilities simultaneously.

The dialogue system 1 proposed by the present invention can be in a predetermined number of dialogue states, which will be indicated hereinafter as DSi, wherein i is an integer larger than zero. The number of possible dialogue states DSi is large, but finite. Each dialogue state DSi is characterized by one or more of the following dialogue actions to be performed by the system:
a) Presenting information to the user.
b) Posing a question to the user.
c) Receiving input from the user.
d) Taking an action in response to the input (c).
e) Going to a next dialogue state in response to the input (c).

The dialogue actions (a) and (b) concern an information transfer from the system to the user. In action (a), the information may for instance be presented on a display or a screen, but the information may also be presented auditively in the form of speech. In action (b), a question can be posed in written form, for instance by projection on a screen, but preferably a question is posed auditively in the form of speech.

The dialogue action (c) concerns an information transfer from the user to the system. The input can concern data to be processed, but may also be a command or a question, respectively; preferably, input takes place through spoken text.

The dialogue action (d) concerns an action not necessarily involving information transfer from and/or towards the user.

A transition from a dialogue state DSi to a next dialogue state DSj will be indicated as transition TR(i;j).

Figure 2 illustrates schematically a number of dialogue states DS1 to DS6 in the form of circles, and possible transitions in the form of arrows. Next to the arrow which connects dialogue state DS1 with dialogue state DS4, the indication TR(1;4) is shown; the other transition indications are left out for the sake of simplicity. It appears clearly from figure 2 that the system 1 can reach a certain dialogue state (for instance DS4) from different previous dialogue states (for instance DS1, DS2). Further it appears clearly from figure 2 that, from a certain dialogue state (for instance DS1), the system has in principle a plurality of transitions available (for instance TR(1;4), TR(1;5), TR(1;6)) for reaching a next dialogue state (DS4, DS5, DS6, respectively); the system will decide, based on the input received from the user, which transition is actually made.

In many dialogue states, the system has certain communication options regarding the communication with the user. Regarding the information transfer from the system to the user (the dialogue actions (a) and (b)), the system has for instance the following options:
- which information to present or which question to pose, respectively;
- which order to keep when presenting information or posing questions, respectively.

Regarding the information transfer from the user to the system (the dialogue action (c)), the system has for instance the choice of how a particular request must be interpreted.

Further, in many dialogue states, the system has certain action-options regarding an action to be taken (dialogue action (d)) or a transition to be executed (dialogue action (e)).

According to an important aspect of the present invention, the dialogue system 1 is, at least in at least one dialogue state, not fixed in executing the above-mentioned options but the system conforms itself in an adaptive way to the apparent wishes of the user concerned. More particularly, the system remembers which choices the user has made in the past in the same circumstances, and the system considers that the user now wants to make the same choice. Thus, the system develops for each user a user profile which defines for the above-mentioned option preferences associated with a certain user. During each dialogue session between system and user, first the identity of the user is established by the system, the user profile associated with that user is activated, and that activated user profile is used for making choices. Further, if necessary, the user profile will be amended.

For recording and remembering the user profile, the system comprises a memory which is not shown for the sake of simplicity.

Hereinafter, the present invention will be further explained in the light of some examples, wherein it will be assumed that the communication between user and system takes place through speech, and wherein always will be assumed that no speech confusion arises. Further, the dialogue system will be indicated by the character S and the user will be indicated with the character U.

In a first dialogue state, the identity of the user is examined. For instance, that can be done as follows:
- U:: "new user".
- S:: "what is your name?"
- U:: "Janssen".

Then, in a second dialogue state, the system can execute a verification step, wherein some personal data of the user are mentioned, and wherein the user is asked for confirmation, and finally the system can ask a password or verification code. For reasons of security and for protecting the privacy of the user, these data are preferably not exchanged by means of speech but in a way which is not easily overheard by those accidentally present, for instance through screen and keyboard.

When the system has established the identity of the user, the system enters a third dialogue state, wherein the user is asked what he now wants to do, for instance as follows:
- S:: "what do you want to do?".

There is, of course, a large amount of possibilities for the user, but for the sake of simplicity it will be assumed that the user can chose from the following actions:
1) making an examination report;
2) examining lab results;
3) writing a report letter;
4) writing a referral letter;
5) requesting an examination.

Suppose that the user is a family doctor who wishes to make a referral letter, and who answers as follows:
- U:: "letter".

Here, the system finds insufficient information in the input for making a choice: the possibilities (3) and (4) are the most probable, but the possibilities (1) and (5) cannot be excluded. Then, the system is forced to obtain further information.

Conventionally, a computer program returns to a question step if the answer to the question does not meet the criteria set by the program. In this case, this would mean that the system would repeat its question, and that the above-described cycle of question and answer can stay repeating itself.

In order to make clear to the user what is expected, the dialogue system might follow the options one by one in a fixed order, and ask if that is the right choice, as follows:
- S:: "do you want to make an examination report, yes or no?"
- U:: "no"
- S:: "do you want to examine lab results, yes or no?"
- U:: "no"
- S:: "do you want to write a report letter, yes or no?"
- U:: "no"
- S:: "do you want to write a referral letter, yes or no?"
- U:: "yes"

Of course, this cycle of questions does lead to the result that the wish of the user is made clear, such that the system can go on to a next dialogue state, but it is inconvenient to the user that only the fourth question is a hit. In practice, of course, the number of possibilities is larger, and so it can take longer before the system reaches the possibility wished by the user.

According to an important aspect of the present invention, the system is adapted for remembering the answer of the user, and for incorporating the answer in the user profile belonging to this user U. When this same user U reports a next time, the system will pose its question, based on earlier experiences recorded in the user profile. After all, apparently this user U meant "referral letter" with the command "letter" and the chances are that is what he means now again. A next time, the system will pose this question first.

The system may be adapted for adapting each choice to the previous meaning of the command concerned, but preferably the system is adapted to adapt its choice to the largest number of previous meanings of the command concerned. If, after six "referral letters", the user writes a report letter ones, a next time the system will still assume that the command "letter" means "referral letter".

After a learning phase, in which the system "gets used" to the user, the system will "recognize" this command "letter" better and better in a way adapted to the user concerned. With a different user, the recognition can progress differently. Suppose that a second user exists, a surgeon who, with "letter", always means "report letter"; in time, the system will associate the command "letter" with the meaning "report letter" with this second user, and will incorporate that in the user profile belonging to this second user.

In this way, all users are offered the important convenience of use that the dialogue system "understands" what the user means by certain instructions.

In the end it may even be so that the dialogue system recognizes with the first-mentioned user (general practitioner) that he will almost always request a referral letter, and only seldomly something else. Then, the dialogue system can adapt its first question in this dialogue state to this, for instance by, instead of "what do you want to do?", posing as first question:
- S:: "do you want to make a referral letter again?"

Another example concerns a specialist who wants to refer a patient to a radiologist for making an X-ray photo. Then, the system enters a dialogue state in which further information is asked about the X-ray photo to be made; in the referral letter must, inter alia, be included from which part of the body the photo must be made. The system can ask the specialist for information, as follows:
- S:: "which part of the body?"
- U:: "lungs"

It will however be clear that a lung specialist is generally more interested in lung photos than in photos from other body parts such as knees. Because the lung specialist primarily chooses for lung photos, the system according to the present invention incorporates this preference in the user profile of this user/lung specialist, and it will adapt the dialogue thereto. Then, for instance, the dialogue can be:
- S:: "lung photo?"
- U:: "yes"

An important advantage according to the present invention is the increased ease of use in that exchange of information takes place by means of speech, at least in as far as it concerns the direct transfer from and towards a user. In the system itself, and/or in a communication network, the transfer can take place by means of other, more suitable coding. For instance, in the case of communication through internet, the speech signals can be converted into HTML codes.

Generating speech by a system for communication with the user can be performed in several ways. By way of example it is possible that a sequence of characters (letters, numerals), for instance ASCII-characters, generated by the system, are converted into speech signals by a speech converter at the place of the user. However, it is also possible that use is made of preprogrammed speech sequences, which can be activated by the system as desired by sending a regarding activation code ("canned speech"). An advantage associated with this latter method is that the system can confine itself to generating a relatively short code (for instance: code=1), while at the place of the user a relatively long sentence, containing much information, is generated (for instance: "what do you want to do?").

A further important advantage of the system according to the present invention is the flexible interaction with the user. In the foregoing it has already been explained that the system bases itself, when making choices, on the user profile associated with the user. Further, the system is very flexible in accepting input by the user. More particularly, the user is not obligated to formulate his commands and data input according to a predetermined format. In the foregoing, it has been described by way of example that a user reports himself with the message "new user". However, the user is not bound to report himself in this way. The system is arranged for, within certain limits, understanding the semantics of the user's command, for instance by recognition of certain key words (for instance: "I am a new user"), or recognition of equivalence (for instance: "I want to begin"). Such key words and/or equivalence can be preprogrammed. However, also in this respect it is possible that the system adapts itself to the user by incorporating earlier non-understood input in a table of equivalence in the user profile after elucidation. A user who reports himself with for instance the text "hello", will maybe not be understood directly. By means of a cycle of question/answer, the system can then learn the intention of the user. By regarding the association between this intention and the text "hello", a next time this user reports himself with the text "hello" the system will automatically be able to interpret this as being a possible equivalent for "new user".

Since it will be clear to persons skilled in the art how the system according to the present invention can be implemented by suitable software and/or hardware, this aspect will not be explained here further.

It will be clear to a person skilled in the art that the scope of the present invention is not limited to the examples discussed in the foregoing, but that several amendments and modifications thereof are possible without deviating from the scope of the invention as defined in the attached claims.

## Claims

1. Adaptive speech-controlled dialogue system (1), comprising a speech-based communication interface through which a user (Ul; U2; U3) can receive and input data and can input instructions, wherein the system is arranged for adapting a dialogue characteristic to specific wishes of a specific user based on experience in relation to this specific user.

2. Dialogue system according to claim 1, wherein the communication interface uses a network such as a telephone network (4) or the internet (5).

3. Dialogue system according to claim 1 or 2, wherein the system can be in a predetermined number of dialogue states (DSi), wherein each dialogue state (DSi) is associated with predetermined dialogue actions, including predetermined transition possibilities (TR(i;j)) to predetermined other dialogue states (DSj).

4. Dialogue system according to claim 3, wherein, in at least one dialogue state, the system has certain communication options with respect to the communication with the user.

5. Dialogue system according to claim 4, wherein, at least in respect of at least one of said dialogue states where the system has communication options, the system adapts itself in an adaptive way to apparent wishes of the user concerned.

6. Dialogue system according to claim 5, wherein the system is arranged for, for at least one user (U), developing a user profile which defines for the said communication options the preferences associated with that said user (U).

7. Dialogue system according to claim 6, wherein the system is arranged for, at least in respect of the said one dialogue state, incorporating an answer or choice given by the user into the user profile belonging to this user (U).

8. Dialogue system according to claim 6 or 7, wherein the system is arranged for posing questions in a certain situation based on the earlier experiences with respect to the same situation embedded in the user profile.

9. Dialogue system according to claim 6 or 7, wherein the system is arranged for interpreting an instruction of the user (U) in a certain situation based on the earlier experiences with respect to the same situation incorporated in the user profile.

10. Dialogue system according to claim 8 or 9, wherein the system is arranged for incorporating into the user profile exclusively the last previous experience with respect to a certain situation.

11. Dialogue system according to claim 8 or 9, wherein the system is arranged for embedding into the user profile a predetermined number of previous experiences with respect to a certain situation, and to base its choice on the largest number of experiences incorporated in the user profile.
